# EUROPEAN PATENT APPLICATION

(11) **EP 2 281 646 A1**
(43) Date of publication of application: **09.02.2011**
(21) Application number: 09164472.4
(22) Date of filing: 02.07.2009
(51) Int. Cl.: B22F 1/00, B22F 9/24, C22B 5/00

(54) **Method and kit for manufacturing metal nanoparticles and metal-containing nanostructured composite materials**

(71) Applicant: Nederlandse Organisatie voor Toegepast -Natuurwetenschappelijk Onderzoek TNO, 2628 VK Delft (NL)
(72) Inventor: Rucareanu, Simona Magdalena, 5611 VZ Eindhoven (NL)
(74) Representative: Hatzmann, Martin

(57) **Abstract**

A process for making metal nanoparticles or metal-containing nanostructured composite materials is disclosed which involves contacting a reducing agent with a composition comprising (1) a homogeneous single-phase liquid solution comprising water; at least one metal salt and/or metal salt complex dissolved in the solution to provide metal ions, or metal ion complex, in the solution; at least one dispersion stabilizer; and at least one polar hydrocarbon compound other than the dispersion stabilizer that is miscible with water and the dispersion stabilizer and optionally (2) one or more solid substrates.

A kit for making metal nanoparticles or metal-containing nanostructured composite materials comprising components (A) and (B) is also disclosed in which component (A) is a composition comprising (1) a homogeneous single-phase liquid solution comprising water; at least one metal salt, or metal salt complex, dissolved in the solution; at least one dispersion stabilizer; and at least one polar liquid hydrocarbon compound other than the dispersion stabilizer which is miscible with water and the dispersion stabilizer and optionally (2) one or more solid substrates and (B) is a reducing agent.

## Description

### BACKGROUND OF THE INVENTION

The present invention relates to the manufacture of metal nanoparticles and nanostructured composite materials.

There has been an increasing interest in the manufacture of metal nanoparticles and metal-containing nanostructured composite materials for a wide range of technical applications. Examples include conductive inks for patterning conductive structures via printing (inkjet, flexographic, gravure, screen), catalytic materials, and antiseptic formulations. Various methods have been developed to manufacture such materials. They generally involve synthesis of alkyl-amine stabilized metal nanoparticles.

However, many of the methods developed to date have various drawbacks. Drawbacks include the use of organic solvents, corrosive or toxic reagents, high temperatures, expensive starting materials, and/or multiple steps for isolating the product, such as precipitation via addition of an organic solvent prior to filtration or centrifugation.

US 2007/099357 A1, for example, discloses a process for making silver-containing nanoparticles, which requires the use of hydrazine, an aggressive and toxic reducing agent, for reducing silver ions in toluene solution at 60°C to form elemental silver-containing nanoparticles.

While WO 2007/143125 discloses a process for making silver particles using ascorbic acid as the reducing agent, this document teaches that nitric acid and a "surface modifier", such as gum arabic, a stearate salt, etc., are required. WO 2009/039401 discloses a process for making spherical silver particles involving addition of ascorbic acid solution to a silver-polyethylene amine complex solution, wherein the solvent for the solution may be water or a polyol such as diethylene glycol. Heating to 80°C for two hours was required to form a complex between the polyethylene amine and the silver ions of the silver salt prior to adding the ascorbic acid. The resulting silver particles are reported to have average diameters in a range from 0.06 to 0.97 microns. Particle diameters less than 1 micron required a reaction temperature for reduction with ascorbic acid greater than 40°C.

US 2006/0254387 discloses a method of producing hydrophobic metal nanoparticles stabilized with alkylamines and/or alkanoic acids in hydrophobic solvents (toluene, xylene) by thermal dissociation of a metal compound at temperatures between 70-200°C.

In view of the foregoing, a simple and efficient method for manufacturing metal nanoparticles and metal-containing nanostructured composite materials is therefore desired, which produces such products in an environmentally friendly way under mild process conditions. This problem is solved by the invention described below.

### SUMMARY OF THE INVENTION

One aspect of this invention is a process for making metal nanoparticles or metal-containing nanostructured composite materials comprising:
(a) providing a composition comprising (1) a homogeneous single-phase liquid solution comprising water; at least one metal salt and/or metal salt complex dissolved in the solution to provide metal ions, or metal ion complex, in the solution; at least one dispersion stabilizer for minimizing or preventing aggregation of the metal nanoparticles when the metal ions are reduced to the zero valent elemental state; and at least one polar hydrocarbon compound other than the dispersion stabilizer that is miscible with water and the dispersion stabilizer and, optionally, (2) one or more solid substrates and
(b) contacting the composition of step (a) with a reducing agent while agitating the composition at a temperature below the boiling point of the solution of step (a) for reducing the metal ions to zero valence elemental metal to obtain metal nanoparticles or, when reacted in the presence of the optional nanoparticle or nanoporous substrates, metal-containing nanostructured composites comprising the substrate and the metal,
   wherein the reducing agent is, under the contacting conditions of step (b), capable of reducing the metal ions of the metal salt and/or metal salt complex to a zero valence elemental state.

Another aspect of this invention is compositions obtainable by the process according to this invention. In particular, this aspect relates to compositions comprising metal nanoparticles and/or metal-containing nanostructured composites suspended in a mixture of ethanol, water, stabilizer, and at least one ascorbic compound selected from the group consisting of (iso-)ascorbic acid, diketone tautomer of (iso-)ascorbic acid, and dehydro(iso-)ascorbic acid, esters thereof and salts thereof.

A further aspect of this invention is a kit for making metal nanoparticles or metal-containing nanostructured composite materials comprising:
(A) a composition comprising (1) a homogeneous single-phase liquid solution comprising water; at least one metal salt, or metal salt complex, dissolved in the solution to provide metal ions, or metal ion complex, in solution; at least one dispersion stabilizer for minimizing or preventing aggregation of the metal nanoparticles when the metal ions are reduced to the zero valent elemental state; and at least one polar liquid hydrocarbon compound other than the dispersion stabilizer which is miscible with water and the dispersion stabilizer and, optionally, (2) one or more solid substrates and
(B) a reducing agent composition for reducing the metal ions to nonionic metal comprising a reducing agent that is capable of reducing the metal ions of the metal salt and/or metal salt complex of composition (A) to a zero valence elemental state.

Yet another aspect of this invention is a method for making metal nanoparticles or composite materials comprising combining components (A) and (B) of the above kit form a mixture while applying agitation to the mixture at a temperature below the boiling point of the solution of component (A) (preferably at room temperature) for a time period sufficient to form the metal nanoparticles or metal-containing nanostructured composite materials.

### BRIEF DESCRIPTION OF THE FIGURES

Fig. 1 is a transmission electron micrograph (TEM) image of silver oleylamine nanoparticles obtainable via the process according to this invention.
Fig. 2 is a TEM image of gold oleylamine OLA nanoparticles obtainable via the process according to this invention.

### DETAILED DESCRIPTION OF THE INVENTION

### Definitions

As used herein, the term "nanoparticle(s)" refers to particles having an average particle size (mean diameter) measured by transmission electron microscopy (TEM) not greater than 500 nm.

The term "particle size", when used in reference to metal nanoparticles, is defined herein as the average diameter of metal-containing particle core, excluding any stabilizer, as determined by TEM. A determination method that makes use of TEM is, for example, described in EP 1 844 884 A1. A method wherein the particle counting in the TEM analysis process is automated is described in Turk. J. Chem. 30 (2006) pp. 1 - 13. The use of UV-VIS absorption spectroscopy for determining nanoparticle characteristics, in particular for determining a change in size or the degree of aggregation, is described in J. Supramolecular Chemistry, 2002, pp. 305 - 310, and in references therein.

The expression, "metal ion" refers to a metal which is in an oxidized (i.e., positive) valence state relative to its zero valence elemental state.

The expression, "reducing agent" refers to a chemical substance having a positive reduction potential relative to the reduction potential of the metal ion sufficient to reduce the metal ion to a zero valent elemental state.

The term "miscible" refers to two or more liquids, such as two or more solvents, that form a single-phase substantially homogeneous mixture upon mixing at the mixing ratio(s) and temperature(s) used in the method according to this invention. When the mixing ratio is not specified, the specified solvents are considered miscible when they are capable of forming a single-phase substantially homogeneous mixture at 25°C when the mixture contains equal volumes of the specified solvents. The term "miscible" preferably means that the two or more liquids form a single-phase substantially homogeneous mixture upon mixing in any and all proportions.

Unless specified otherwise, the term "amine" refers to the neutral amine, the corresponding ammonium (its conjugated acid), as well as their respective salts.

Unless specified otherwise, the expressions "carboxylic acid" and "carboxylate" refer to the neutral carboxylic acid and the corresponding carboxylate (its conjugated base), respectively, as well as their respective salts.

When referring herein to an amino acid, this term is meant to include (1) the amino acid in its zwitterionic form (in which the amino group is in the protonated and the carboxylate group in the deprotonated form), (2) the amino acid in which the amino group is in its protonated form and the carboxylic group is in its neutral form and (3) the amino acid in which the amino group is in its neutral form and the carboxylate group is in its deprotonated form as well as salts thereof.

The expression "wt.%" means "weight-percent".

A conductive element can be any structure which is electrically conductive, in particular a conductive element may be a conductive image, a conductive layer or a conductive pattern.

### Metal salts and metal salt complexes

Suitable metal salts and metal salt complexes include those which are soluble in the single-phase liquid solution, and reduced by the reducing agent from an ionic valence state to a zero valence elemental metallic state. Preferred metals include silver, gold, copper, platinum, palladium, nickel, indium, tin, iron, cobalt and combinations of two or more of these metals. Preferred metal salt anions include nitrate, acetate, lactate, carbonate, phosphate, sulfate, sulfonate, stearate, myristate, perchlorate, benzoate, acetylacetonate, and combinations thereof. Preferred metal complexes include amine complexes such as complexes with ethanolamine, ethylenediamine (EDA), *N,N-*dimethylenediamine (DMA), *N,N,N',N*'- tetramethylenediamine (TMEDA), aminoacids, ethylene diamine tetraacetic acid (EDTA).

The nitrate, acetate, lactate, phosphate and sulfate silver salts are preferred. Specific examples include AgBF₄, AgPF₆, CH₃COOAg, and AgCF₃SO₃.

Preferred gold complexes include hydrogen tetrachloroaurate (III) trihydrate (HAuCl₄x3H₂O), KAuCl₄, NaAuCl₄x2H₂O and AuBr₃, gold carboxylates: acetate, propionate, pivalate, heptanoate, octanoate, decanoate, dodecanoate, etc.

Preferred copper salts include Cu(NO₃)₂, CuCl₂, and CuSO₄, Cu(acetate)₂.

Preferred nickel salts include NiCl₂, Ni(NO₃)₂ and NiSO₄.

The concentration of metal ions in the solution of step (a) and kit component (A) is preferably at least 0.01, more preferably at least 0.02, and even more preferably at least 0.05, up to 0.3, more preferably up to 0.2, and even more preferably up to 0.1, mmole per milliliter of the solution of step (a) and kit component (A).

### Reducing agent

Suitable reducing agents include those which are (1) substantially non-reactive with the solvent and the dispersion stabilizer relative to its reactivity with the metal ions and/or metal ion complex and (2) capable of reducing the ionic metal of the metal salt and/or metal salt complex of composition (A) to a zero valence elemental state.

The reducing agent is preferably a substance (as opposed to a cathode or α-gamma rays). The reducing agent substance is preferably soluble in, or miscible with, the solution of step (a) or kit component (A). It is preferably a compound other than a hydrazine or hydrazide compound.

Suitable reducing agents include ascorbic acid compounds, borohydrides, and polymer-bound borane, and combinations thereof. Ascorbic acid compounds include ascorbic acid, iso-ascorbic acid, diketone tautomers of ascorbic acid, and dehydroascorbic acid, esters thereof and salts thereof.

Examples of ascorbic acid includes L-ascorbic acid and D-ascorbic acid and their salts, such as sodium ascorbate, and resins with immobilized ascorbic acid (also referred to as "ascorbic acid resins"). Preferably, at least 0.1, more preferably at least about 1.0, and even more preferably at least 5.0, millimoles of ascorbic acid are covalently bonded to, or immobilized on, each gram of polymer Examples of suitable polymers include polystyrenes, polyacrylamides or polyacrylates. The polymers may be crosslinked to decrease the solubility of the polymer in solvents to enhance their immoblilizing effect. Ascorbic acid is preferably bonded to the polymer art its primary alcohol. Suitable ascorbic acid resins include those disclosed and described in WO 2000/072959.

Examples of borohydride cations include alkali and alkaline earth metal ions, such as the Na+ and K+.

Examples of resin-immobilized reducing borane agents include: polymer-bound ethylenediamine-borane reagent (such as those disclosed in the Journal of Applied Polymer Science, 2001, 82 (3), pp. 593-600), polymer bound borane-morpholine (such as Sigma-Aldrich cat no 561878), borohydride on polymer support (such as Sigma-Aldrich, cat no 15595), polymer supported borohydride (polystyrylmethyl)trimethylammonium borohydride) (such as Sigma-Aldrich, cat no 359947).

The amount of reducing agent introduced into the composition provided in step (a) or kit component (A) is preferably at least 1, more preferably at least 1.1, even more preferably at least 1.2, up to 5, more preferably up to 2, mole equivalent per mole equivalent of metal ions provided in step (a) or kit component (A), respectively.

### Stabilizer

The stabilizer has the function of minimizing or preventing aggregation of the metal-containing nanoparticles when the nanoparticles are in a liquid, and preferably has the function of providing dispersability of the metal-containing nanoparticles in a liquid, particularly in hydrophobic organic solvents, such as toluene, decaline, tetraline, decane, dodecane, tetradecane, or xylene. This function is generally achieved by coordinating or binding to the surface of the metal core. Suitable stabilizers are soluble in, or miscible with, the solution of step (a) of the process or component (A) of the kit.

The stabilizer is preferably thermally removable, i.e., the stabilizer dissociates from the metal-containing nanoparticles, such as via evaporation or decomposition of the stabilizer into a gaseous or volatile form, under certain conditions, such as via heating and/or reduction of ambient pressure below atmospheric pressure. In that case, the dissociation temperature is preferably below 250°C., more preferably below 200°C at a temperature at a pressure of at least 1 Pa, more preferably at least 10 Pa, and even more preferably at atmospheric pressure. The stabilizer can also be removed by laser microwave e-beam or light (continuous or pulsed) treatment.

The stabilizer is preferably one or more hydrocarbon compounds having one or more non-metal heteroatoms such as one or more N, O, S, P, Si, and halogen. The compounds preferably have a lone pair of electrons of at least one N, O, S, or P atom which allows coordinate covalent bonds with metal nanoparticles. Functional groups having an N atom include amino groups. Functional groups having an O atom include carboxyl groups, hydroxyl groups, and the ether-type oxy group. Functional groups having an S atom include sulfanyl groups and sulfide-type sulfanyl groups. Functional groups having a P atom include phosphine groups.

Preferred stabilizers include compounds having one or more amine, carboxylic, thiol, and/or phosphine functional groups, including combinations of these functional groups on the same molecule along with optional additional non-interfering functional groups, and including non-interfering salts, esters and complexes thereof. Examples of salts include alkali metal, alkaline earth metal, and ammonium salts thereof.

The stabilizer preferably comprises at least one mono- or multi-valent hydrocarbyl(ene) having at least 2, more preferably at least 4, even more preferably at least 8, up to 24, more preferably up to 20, even more preferably up to 18, yet more preferably up to 16, and even more preferably up to 12, carbon atoms. The mono- or multi-valent hydrocarbyl(ene) is preferably a saturated hydrocarbyl(ene), and is more preferably a straight- or branched-chain alkyl(ene) group.

Amine compounds include linear, branched and cyclic hydrocarbon compounds having one or more primary, secondary and/or tertiary amine groups. The amine compounds are preferably selected from hydrocarbyl amines and aliphatic quaternary ammonium compounds, wherein the hydrocarbyl group is preferably an aliphatic, aliphatic ether, poly(aliphatic ether), or aromatic group. The aliphatic groups are preferably one or more linear or branched alkyl groups and/or alkenyl groups. Said groups preferably have at least 4 up to 24, more preferably up to 20, and even more preferably up to 18 carbon atoms. Particularly preferred aliphatic groups include hexyl, octyl, decyl, dodecyl, and octadecene.

Suitable aromatic amines in particular include aromatic amines having a six-membered aromatic ring, more in particular an aminopyridine. In particular a 4-(*N,N* dialkylamino)pyridine may be used. Herein each of the alkyls preferably is a C1 - C6 alkyl. Preferred aromatic amines include: aniline, o, m, p-toluidine, 2,4,6-trimethylaniline, anisidine, 3-fluoromethylaniline.

The quaternary ammonium compound may in particular be selected from tetra(hydrocarbyl)ammonium compounds. The hydrocarbyls may in particular be selected from alkenyl groups and alkyl groups. The hydrocarbyl groups usually are independently selected from hydrocarbyl groups having 18 carbon atoms or less. Preferably one or more of the hydrocarbyl groups have 12 carbons or less, more preferably 10 carbon atoms or less. One or more of the hydrocarbyl groups preferably are independently selected from hydrocarbyl groups having at least 2, at least 4 or at least 6 carbon atoms. In particular tetraoctylammonium or cetyltrimethylammonium may be used. The quaternary ammonium compound may in particular be a halogenide salt, such as a bromide or chloride salt.

In a preferred embodiment, the amine compounds preferably have the chemical formula (I):

(E(OCH₂CH₂)ₚ(OCH₂CH₂CH₂)_{q})ₘNH₃₋ₘ₋ₙ-Rₙ (I)

in which "E" represents a hydrogen atom or a hydrocarbyl group as defined above, "R" represents a hydrocarbyl group, "m" and "n" are positive integers having a value of 0, 1, or 2, wherein the sum of m + n equals a value in the range from 1 to 3, and "p"and "q"are individually equal to a value in the range from zero to 20, positional isomers and salts thereof. Each of the aforementioned hydrocarbyl groups, taken individually, is preferably a straight- or branched-chain alkyl group.

In a preferred embodiment, R represents -(CH₂)ᵣCH₃) in which "r" represents a value in the range from zero to 20. In this embodiment, the sum of p + q + r preferably equals a value in the range from at least 4, more preferably at least 6, up to 25, and more preferably up to 16.

Preferred primary mono-amine compounds include butylamine, pentylamine, hexylamine, heptylamine, octylamine, nonylamine, decylamine, hexadecylamine, undecylamine, dodecylamine, ethoxylated amine, propoxylated amine, and ethoxylated propoxylated amine, and positional isomers and salts thereof. A particularly preferred mono-amine compound is 1-amino-9-octadecene (oleyl amine).

Preferred primary diamine compounds include diaminopentane, diaminohexane, diaminoheptane, diaminooctane, diaminononane, diaminodecane, diaminododecane, diamino(alkylene oxide)ₛ, wherein each alkylene group has 2 or 3 carbon atoms and "s" represents an integer in the range from 2 to 20, and positional isomers and salts thereof.

Preferred secondary mono-amine compounds include dibutylamine, dipentylamine, dihexylamine, diheptylamine, dioctylamine, dinonylamine, didecylamine, methylpropylamine, ethylpropylamine, propylbutylamine, ethylbutylamine, ethylpentylamine, propylpentylamine, butylpentylamine, alkoxylated alkyl amine, ethoxylated alkyl amine, propoxylated alkyl amine, ethoxylated propoxylated alkyl amine, wherein the alkyl group preferably has at least 2, more preferably at least 4, even more preferably at least 8, up to 20, more preferably up to 16, and even more preferably up to 12, carbon atoms, and positional isomers and salts thereof.

Preferred tertiary amines include tributylamine and trihexylamine, and positional isomers and salts thereof. Preferred cyclic amine compounds include hydrocarbyl-substitutedpyridines, such as (C4-C16) alkyl-substitutedpyridines (e.g., dodecyl pyridine). The secondary amines are preferred over the tertiary amines and the primary amines are preferred over the secondary amines.

The ether amine alkoxylates disclosed in U.S. Patent 6060625 and U.S. Patent 6063145, the disclosures of which are hereby incorporated herein by reference, may also be used when they comprise at least one hydrocarbyl group having at least 4 carbon atoms and have at least one lone pair of electrons on an amine nitrogen atom.

Carboxylic compounds include linear, branched and cyclic saturated or unsaturated hydrocarbon compounds having one or more primary or secondary carboxylic groups. The carboxylic compounds are preferably represented by the chemical formula (II):

R'(C(O)OE')ₛ (II)

in which R' represents a hydrocarbyl(ene) group having at least 4, preferably at least 6, even more preferably at least 8, up to 40, preferably up to 30, more preferably up to 25, carbon atoms, E' represents a cation, and s represents a positive integer. The hydrocarbyl(ene) group is preferably a straight- or branched-chain alkyl(ene) or alkenyl(ene) group. The cation is preferably H or an alkali metal. The number of carboxy groups, s, may be 6 or less, more preferably 4 or less. In some embodiments, s is preferably not greater than 2, and is more preferably 1.

The carboxylic acid may in particular be an aliphatic carboxylic acid. It may be a mono-carboxylic acid or a polycarboxylic acid, such as a dicarboxylic acid or a tricarboxylic acid.

The carboxylic acid preferably has up to 24 carbon atoms, more preferably up to 20, even more preferably up to 18, and yet more preferably up to 16 carbon atoms. The carboxylic acid preferably has at least 6 carbon atoms. A carboxylic acid may for example be selected from the group of decanoic, dodecanoic, tetradecanoic, and hexadecanoic acid.

Preferred primary mono-carboxylic compounds include 1-butanoic acid, 1-pentanoic acid, 1-hexanoic acid, 1-heptanoic acid, 1-octanoic acid, 1-nonanoic acid, 1-decanoic acid, 1-hexadecacanoic acid, 1-undecanoic acid, and 1-dodecanoic acid and positional isomers and salts thereof. Preferred unsaturated mono-carboxylic acids include: palmitoleic acid, oleic acid, linoleic acid, α-linolenic acid, arachidonic acid, erucic acid, docosahexaenoic acid, and eicosapentaenoic acid. Preferred primary dicarboxylic compounds include members of the oxalic acid series represented by CₙH₂ₙ(COOE')₂ in which "n" represents a positive integer of at least 4, more preferably at least 5, and even more preferably at least 6, up to 18, and more preferably up to 14, and positional isomers and salts thereof. In one embodiment, the primary carboxylic acids and salts are preferred over the secondary carboxylic acids and salts.

The stabilizer may also comprise one or more amino acids. The amino acid may be aliphatic or aromatic. Usually, the amino acid has up to 24 carbon atoms, preferably up to 20, up to 18 or up to 12 carbon atoms. The amino acid preferably has at least 3, or at least 4 carbon atoms. In particular, an amino acid may be selected from glutamic acid, aspartic acid, 7-aminoheptanoic acid and 11-aminoundecanoic acid.

Preferred amino acids may be represented by the chemical formula (III):

NH₂- R'-(C(O)OE') (III)

in which R' and E' have the same meanings as defined above for formula (II) (including the preferred meanings), provided that R'is a divalent group.

Thiol compounds include linear, branched and cyclic hydrocarbon compounds having one or more thiol groups. The thiol compounds are preferably represented by the chemical formula (IV):

R'(SE')ₛ (IV)

in which R', E' and s have the same meanings, including the preferred meanings, as in formula (II) above.

Preferred mono-thiol compounds include butanethiol, pentanethiol, hexanethiol, heptanethiol, octanethiol, decanethiol, and dodecanethiol. Preferred dithiol compounds include 1,2-ethanedithiol, 1,3-propanedithiol, and 1,4-butanedithiol. The thiol compounds are less preferred stabilizers than the amine or carboxylic compounds when the metal nanoparticles are intended for making conductive patterns due to the potentially corrosive effect of residual sulfur.

Phosphines include aliphatic and aromatic monophosphines. The phosphine compounds preferably have the chemical formula (V):

R"ₘPH₃₋ₘ (V)

in which R" represents a hydrocarbyl group and m is a positive integer in the range from 1 to 3. Preferably, at least one R" comprises at least six carbon atoms. More preferably, each R" comprises at least six carbon atoms. The hydrocarbyl group is preferably a straight- or branched-chain alkyl group, a cycloalkyl group, or an aromatic group. The aromatic group is preferably a phenyl group.

Preferred phosphine compounds include triphenylphosphine, dicyclohexylphenyl-phosphine, trioctylphosphine, tricyclohexylphosphine, cyclohexyldiphenylphosphine.

The amount of the stabilizer used in the composition of step (a) and kit component (A) is preferably at least 1, more preferably at least 2, even more preferably at least 5, up to 75, more preferably up to 30, even more preferably up to 25, and yet more preferably up to 15, wt.% based on the total mass of the nanoparticles. In a preferred embodiment, the composition of step (a) and kit component (A) contain less than 1, more preferably less than 0.1, even more preferably less than 0.01, and even more preferably less than 0.001, molar equivalents of water-soluble polymer and/or polyamine per mole of metal ion. The dispersion stabilizer is preferably soluble in, and more preferably miscible with, the solution of step (a) of the method or component (A) of the kit.

In a preferred embodiment, the stabilizer has a number average molecular weight less than 1000 g/mol, more preferably less than 750 g/mol, and preferably at least 100, more preferably at least 200, g/mole. A relatively small size is considered beneficial in view of making the surface easily accessible to the reducible metal ion and/or reducing agent. Secondly, a relatively small size may lead to an improved dissociation of the stabilizer during deposition of elemental metal onto the metal-containing nanoparticles to facilitate the growth of the elemental metal nanoparticles to the desired particle size

The attractive force between the metal-containing nanoparticles and the stabilizer can be a chemical bond and/or physical attachment. The chemical bond can take the form of for example covalent bonding, hydrogen bonding, coordination complex bonding, or ionic bonding, or a mixture of different chemical bondings. The physical attachment can take the form of for example van der Waals' forces or dipole-dipole interaction, or a mixture of different physical attachments.

The chemical names of the stabilizer provided herein are before formation of any chemical bond with the metal-containing nanoparticles. While the stabilizer may change with the formation of a chemical bond, the above chemical names refer to the compounds prior to formation of the chemical bond.

### Polar liquid hydrocarbon compound

The polar liquid hydrocarbon compound may be any hydrocarbon compound having at least one functional group comprising at least one heteroatom that, under the contacting conditions of the process according to this invention, is miscible with water and substantially nonreactive with the reducing agent and the stabilizer.

The functional groups may be selected from one or more hydroxyl, ether, and/or ketone groups. The functional groups preferably comprise hydroxyl groups. More preferably, all the functional groups per molecule of the polar liquid hydrocarbon group are hydroxyl groups. Alcoholic hydroxyl groups are particularly preferred.

The polar liquid hydrocarbon compound preferably has no more than 4, preferably no more than 3, and even more preferably no more than 2, consecutive covalently bonded carbon atoms per molecule. The consecutive covalently bonded carbon atoms may be linked to each other via a heteroatom, such as via one or more oxygen atoms to form ether or polyether compounds, respectively.

Suitable polar liquid hydrocarbon compounds include alcohols having from 1 to 3 carbon atoms, such as methanol, ethanol, 1-propanol, and 2-propanol; ketones, such as acetone or propanone; and glycols such as ethylene glycol, propylene glycol, and poly(alkylene glycol), wherein the alkylene groups have from 2 to 3 carbon atoms, such as poly(ethylene glycol), poly(propylene glycol), and poly(alkylene glycol) made from a mixture of ethylene glycol and propylene glycol. Ethanol and methanol are preferred.

The volume ratio of polar liquid hydrocarbon compound to water in the process step (a) composition and kit component (A) is preferably at least 1:3, more preferably at least 1:2, even more preferably at least 1:1, up to 20:1, more preferably up to 12:1, and even more preferably up to 8:1.

### Optional components

The composition of process step (a) and kit component (A) may optionally comprise substrates. Substrates may be selected from a wide range of materials to be treated with the elemental metal nanoparticles. Treatment may comprise deposition of zero valence elemental metal produced in the composition in-situ when the reducing agent reacts with the metal ions during contacting process step (b) or during mixing of kit component (B) with kit component (A).

Preferred substrates are those which have an affinity for the reduced metal ions, such as nanoparticles, microporous materials, and materials that interact with the reduced metal and/or metal ions to bond, complex or adsorb the elemental metal onto its surface.

Nanoparticle substrates are nanoparticles comprising one or more elements that may be the same as, or different from, the elemental metal produced during process step (b) or produced when kit component (A) is mixed with kit component (B). Examples of suitable elements include A1, Ag, Au, Pt, Pd, Cu, Co, Cr, In, Ni, C and Si.

Microporous material substrates are materials of any shape or size that contain micropores capable of receiving nanoparticles produced during process step (b) or produced by mixing kit component (A) with kit component (B). The pores have a number average diameter that is preferably from 1.01 to 20 times the number average diameter of the nanoparticles produced during step (b) or produced by mixing kit component (A) with kit component (B). The pores are preferably nanopores (i.e., pores having a diameter of 500 nm or less, more preferably 100 nm or less, and even more preferably 20 nm or less.

Examples of microporous substrates include α-Al₂O₃, activated carbon, porous carbon fibers, fullerenes, silica, and polymeric substrates.

Optionally, the starting materials or kit components may comprise one or more additives, such as one or more additives selected from the group of dyes, fluorophores and pigments. Such additives may be present when additional functionalities are envisaged such as fluorescence or various colours. Such additives may be present in the solution of step (a), component A of the kit, the reducing agent containing composition of step (b) or component B of the kit. The total concentration of such additives is dependent on the functionality added and could vary between 5% wt.% or less, in particular 2% wt.% or less to 50 wt % or more to 90 wt% or more, based on the total weight of the solution of step (a), component A of the kit, the reducing agent containing composition of step (b) or component B of the kit, respectively.

In an advantageous embodiment of the invention, the solution of step (a), component A of the kit, the reducing agent containing composition of step (b) or component B of the kit are each independently essentially free of polymers that may detrimentally affect a property of the element, such as conductivity. In particular it is preferred that they are essentially free of gelatine, casein, collagen and albumin, more in particular it is preferred that they are essentially free of proteins. As used herein, expression "essentially free of" means a concentration of less than 0.001 wt.%., based on the total weight of the dispersion

If a polymer is present, the total polymer concentration is preferably 0.5 wt.% or less, more preferably 0.1 wt.% or less, even more preferably 0.05 wt.% or less, and yet even more preferably 0.01 wt% or less, based on the total weight of the solution of step (a), component A of the kit, the reducing agent containing composition of step (b) or component B of the kit, respectively. The same preferred ranges apply if a protein is present.

If a polymer is present, this may in particular be a polymer formed by polymerisation of an unsaturated compound (e.g. oleylamine) present in a composition of the invention.

### Reaction conditions

The reaction of the metal ions with the reducing agent is carried out at a suitable temperature. The temperature is preferably at least 0°C, more preferably at least 10°C, more preferably at least 20°C up to 80°C, more preferably up to 60°C, and even more preferably up to 40°C.

The reaction is preferably carried out at a pressure from 0.08 kPa up to 100 kPa, more preferably up to 10 kPa. In a preferred embodiment, the reaction is carried out at atmospheric pressure (nominally 0.1 kPa).

The pH of the solution of step (a) of the process, kit component (A) and the reaction mixture, respectively, is preferably at least 5, more preferably at least 6, up to 7.5, more preferably equal to or less than 7. The pH of the reaction mixture is preferably within the foregoing ranges from the first introduction of reducing agent until substantially all of the metal ions have been reduced.

The reaction is preferably carried out until the reduction of metal ions in the solution is at least 80, more preferably at least 90, even more preferably at least 95, and even more preferably at least 99, percent complete. In a preferred embodiment, the respective conversions are achieved within 12, more preferably within 4, even more preferably within 2hours measured from the time of first contact of the reducing agent with the solution containing the metal ions.

The reaction components and conditions are preferably adjusted to produce metal-containing nanoparticles having an average particle size (mean diameter) of less than 500 nm, more preferably less than 50 nm, yet more preferably less than 20 nm, and even more preferably less than 10 nm. The average particle size (mean diameter) of the nanoparticles is preferably at least 2 nm. The reaction product may contain a plurality of nanoparticle sizes.

Preferably, at least 90 %, in particular at least 95 %, more in particular at least 99 % of the total volume of the nanoparticles is formed by nanoparticles having at least one dimension that is 100 nm or less, in particular 50 nm or less, more in particular 30 nm or less, even more in particular 20 nm or less, preferably 15 nm or less.

Usually, at least 90 %, in particular 95 %, more in particular at least 99 % of the total volume of the nanoparticles is formed by nanoparticles having at least one dimension that is 1 nm or more, or 2 nm or more.

The metal of the metal nanoparticles may be one metal or a combination of two or more metals. The combination of two or more metals may be in the form of a mixture, such as an alloy. Examples of alloys include Au-Ag, Ag-Cu, Au-Ag-Cu, and Au-Ag-Pd alloys.

The optional nanoparticle and microporous substrates may be used to accelerate the formation of elemental metal nanoparticles, to produce nanoparticles made from more than one element, and to produce nanostructured composite materials. The attractive force between the metal and the substrate can be a chemical bond and/or physical attachment. The chemical bond can take the form of for example covalent bonding, hydrogen bonding, coordination complex bonding, or ionic bonding, or a mixture of different chemical bondings. The physical attachment can take the form of van der Waals' forces or dipole-dipole interaction, or a mixture of different physical attachments.

The optional nanoparticle substrates preferably have a particle size and particle size distribution within one of the preferred particle size ranges specified above for the metal nanoparticles produced by the method according to this invention. The nanoparticle substrates may be formed according to the method of the present invention or may be formed by a different method.

The optional microporous substrates preferably have pore sizes and pore size distributions within one of the preferred particle size ranges specified above for the metal nanoparticles produced by the method according to this invention.

Exemplary metal composites are Au-Ag, Ag-Cu, Au-Ag-Cu, and Au-Ag-Pd. Suitable non-metals in the metal composite include for example Si, C, and Ge.

### Products

The metal nanoparticles and metal composites may be isolated from the reaction mixture of process step (b) or from the mixture obtained by combining kit component (A) with kit component (B). Methods for isolation include filtering or centrifuging the reaction mixture and optionally washing the retained nanoparticles or nanostructured composite material.

A nanoparticle-based ink may be made by dispersing the isolated nanoparticles in an organic solvent medium. The solvent medium preferably includes solvents selected from the group consisting of: toluene, xylene, benzene, methylbenzene, ethylbenzene, cyclohexylbenzene, tetraline, decaline, decane, dodecane, and tetradecane, and mixtures of two or more of the foregoing solvents.

The nanoparticles concentration in the ink is usually at least 10 wt.% based on total weight of the formulation. A higher concentration is usually preferred in order the reach the percolation threshold during the sintering step and achieve conductivity. Preferably, the nanoparticle concentration in the ink is at least 5 wt.%. more preferably at least 15 wt.%, and more in particular at least 20 wt%. For a favourable storage stability, easily controllable application of the dispersion (e.g. using ink jets with narrow openings) and/or for facilitating the preparation of a thin element, a concentration of 10 wt.% or more is preferred, in particular a concentration of 15 wt.% or more, and more in particular of 20 wt.% or more.

The ink composition may further comprise a rheology modifier and/or an additive, such as a dye, an addition promoter, a binder, a corrosion inhibitor, an anti-settling agent, or a combination of two or more of the foregoing additives. Such additives may be present in a concentration known per *se,* for conductive ink compositions. The total concentration of such additives is usually 5% wt.% or less, in particular 2% wt.% or less.

The ink composition may be used for producing metallic patterns or films by depositing the ink on a substrate. The depositing may comprise a printing method, such as flexographic printing, rotagravure printing, lithographic printing, screen printing, inkjet printing, intaglio printing, relief printing, laser printing or a combination thereof. Deposition may also be carried out by means of a coating method, such as spincoating, spray coating, slot die, dip coating or a combination thereof. Deposition is preferably carried out by inkjet printing.

The metallic pattern or film may be treated to remove nonmetallic components, such as the stabilizer. Such post-deposition treatment may comprise thermal, infrared (IR) radiation, ultraviolet (UV) radiation, photonic, laser, plasma, microwave, or e-beam treatment, or a combination thereof.

The reaction mixture comprising the metal nanoparticles and/or metal-containing nanostructured composites may be suitable for certain end uses without the above isolation or post-treatment steps. When the metal ion is silver, the polar liquid hydrocarbon is ethanol and the reducing agent is one or more ascorbic compounds, the reaction mixture containing silver nanoparticles may be used as such as an antiseptic or disinfectant agent in hospitals and food preparation settings. If the stabilizer is safe and nontoxic for human and/or animal use, the reaction mixture may be used as a preservative for food, medicine, or other substances subject to bacterial or fungal attack, for treating medical and dental instruments and prosthetic devices, and for treating food preparation devices used in the food industry.

Examples of suitable stabilizers for use of the reaction mixture as an antiseptic composition are the above-described alkoxylated amines and carboxylic acids disclosed in WO 2005/015996 and its U.S. counterpart, US 2005-032668, which are hereby incorporated herein by reference.

The invention may be illustrated by the following examples. Unless otherwise indicated, percentages and parts are by weight, the temperature is approximately standard temperature (20°C), and the pressure is approximately standard pressure (0.1 kPa).

### Example 1

0.01 mol (1,7 g) silver nitrate was dissolved in 30 mL water:ethanol 1:1 (vol:vol). To this clear colorless solution 0.0043 mol (2 mL) oleylamine (Aldrich, technical grade 70 wt.% purity; density = 0.83 g/cm³) was added. The solution became turbid and slightly brownish, and some precipitate forms. 2 mL ethylamine (70 wt.% in water; ∼ 0.030 mol) was added to the above mixture. The precipitate dissolved leading to a viscous solution.

A freshly prepared aqueous solution of sodium borohydride (0.02 mol, 0.756 g in 3 mL demineralized water) was added dropwise under stirring. The mixture turned brown, then dark-brown, and precipitate started to form. The stirring continued for 2 hours and then the mixture was allowed to stand without stirring under ambient conditions overnight. The settled precipitate (bluish metallic reflexes) was separated by centrifugation and dried under vacuum to yield a dark brown solid with bluish metallic shine.

The resulting silver-oleylamine nanoparticles are readily and completely soluble in organic solvents such toluene, decane, tetraecane, decaline. The nanoparticles can be further purified by precipitation with alcohol from a toluene solution, provided that removal of oleylamine by precipitation with alcohol does not reduce the concentration of oleylamine to such a low concentration that insoluble material is formed due to particle aggregation. The nanoparticles can be stored for long periods of time as a solid or for several months in organic solvents.

The UV-Vis spectrum indicated that the Plasmon band is located at 424 nm as expected for silver nanoparticles with a mean diameter < 20 nm.

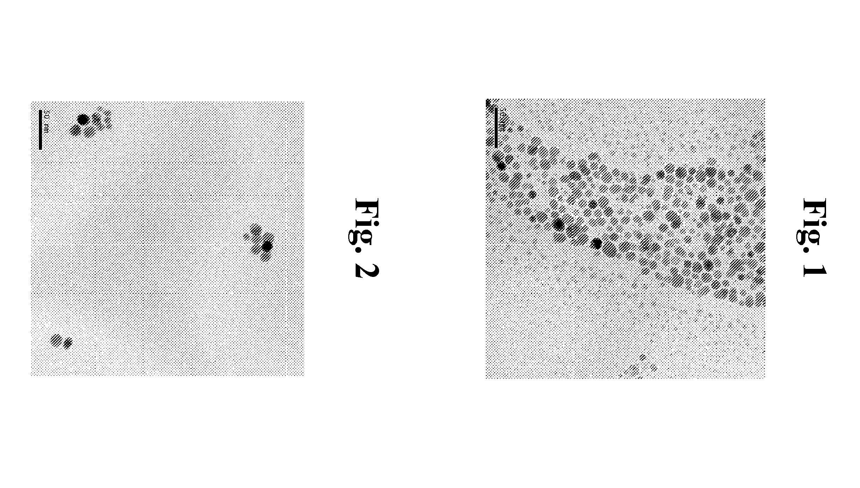

A TEM image of the resulting silver oleylamine nanoparticles is shown in Fig. 1.

### Example 2

0.01 mol (1,7 g) silver nitrate was dissolved in 30mL water:ethanol 1:4 (vol:vol). To this clear colorless solution 0.0043mol (2mL) oleylamine (technical grade 70 wt.%; density = 0.83 g/cm³) was added in small portions. The solution turn turbid slightly brownish then became clear colorless.

A freshly prepared aqueous solution of ascorbic acid (0.4 mL of 10 wt% solution) was added dropwise under stirring. The mixture turned brown then dark-brown and precipitate started to form. The stirring continued for 2 hours then it was allowed to stand under ambient conditions overnight. The settled precipitate (bluish metallic reflexes) was separated by centrifugation and dried under vacuum to yield a dark brown solid with bluish metallic shine.

As in Example 1, the resulting Ag-oleylamine nanoparticles are readily and completely soluble in organic solvents such toluene, decane, tetraecane, decaline and can be further purified by precipitation with alcohol from a toluene solutions can be stored for long periods of time as solid or for several months in organic solvents. The nanoparticles can be stored for long periods of time as a solid or for several months in organic solvents.

The UV-Vis spectrum indicated that the Plasmon band is located at 420 nm as expected for silver nanoparticles with a mean diameter < 20 nm.

### Example 3

2.5 mmol (0.98 g) hydrogen tetrachloroaurate (III) trihydrate (HAuCl₄ x 3H₂O) were dissolved in 10 mL water: ethanol 1:3 (vol:vol) yielding a clear yellow solution. 14.3 mmol oleylamine (6.6 mL, technical grade 70wt.%) was added to the gold solution.

To this mixture, an aqueous solution of sodium borohydride (5 mmol; 198 mg in 3 mL water) was added dropwise. Upon reduction of the gold (III) with formation of gold nanoparticles, the mixture turned brown then dark red. Stirring continued for additional 4 hours then 20mL ethanol were added and the mixture allowed to stand overnight under ambient conditions.

The precipitate settled was isolated by centrifugation, redissolved in 5 mL toluene and precipitated with 15 mL acetone/ethanol 1/1 (vol/vol). The fine particle precipitate was collected by centrifugation and dried in vacuo. The nanoparticles can be stored for long periods of time as a solid or for several months in organic solvents.

A TEM image of the resulting gold oleylamine ("OLA") nanoparticles is shown in Fig. 2.

### Example 4

4.mmol (0.765 g) silver nitrate was dissolved in 15 ml water:ethanol 1:5 vol:vol. A clear colourless solution forms. To this mixture 0.43 mml (0.17 g) hydrogen tetrachloroaurate (III) trihydrate (HAuCl₄ x 3H₂O) were dissolved in 10 mL water:ethanol 1:3 (vol:vol) yielding a orange-brownish turbid suspension. 14.3 mmol oleylamine (6.6 mL, technical grade 70 wt.%) was added to the above mixture; no changes in colour or turbidity were notices.

To this mixture, a freshly prepared solution of ascorbic acid (0.2mL of 10wt% aqueous solution) was added dropwise. The mixture turned brownish then reddish-brown. It was allowed to stir under ambient conditions overnight.

The precipitate formed was isolated by centrifugation and dried. The UV-Vis spectrum shows one Plasmon band located at 471.5 nm. This is consistent with a homogeneous alloy-like composition.

## Claims

1. A process for making metal nanoparticles or metal-containing nanostructured composite materials comprising:
(a) providing a composition comprising (1) a homogeneous single-phase liquid solution comprising water; at least one metal salt and/or metal salt complex dissolved in the solution to provide metal ions, or metal ion complex, in the solution; at least one dispersion stabilizer for minimizing or preventing aggregation of the metal nanoparticles when the metal ions are reduced to the zero valent elemental state; and at least one polar hydrocarbon compound other than the dispersion stabilizer that is miscible with water and the dispersion stabilizer and, optionally, (2) one or more solid substrates and
(b) contacting the composition of step (a) with a reducing agent while agitating the composition at a temperature below the boiling point of the solution of step (a) for reducing the metal ions to zero valence elemental metal to obtain metal nanoparticles or, when reacted in the presence of the optional substrates, metal-containing nanostructured composites comprising the substrate and the metal,
wherein
the dispersion stabilizer is capable of coordinating or bonding with the metal ions of the metal salt and/or metal salt complex and
the reducing agent is, under the contacting conditions of step (b), capable of reducing the metal ions of the metal salt and/or metal salt complex to a zero valence elemental state.

2. The process according to claim 1, wherein the polar hydrocarbon compound comprises at least one alcohol or ketone having from 1 to 3 carbon atoms.

3. The process according to claim 1 or 2, wherein the dispersion stabilizer comprises at least one compound having at least one mono- or divalent hydrocarbon group having at least 5 carbon atoms and one or more non-metal heteroatoms capable of coordinating or bonding with the metal in the zero valence elemental state.

4. The process according to any one of the preceding claims, wherein the reducing agent is soluble in, or miscible with, the solution.

5. The process according to any one of the preceding claims, wherein the reducing agent is a compound other than a hydrazine or hydrazide compound.

6. The process according to any one of the preceding claims, wherein the reducing agent comprises ascorbic acid, one or more borohydride compounds, one or more polymer-bound borane compounds, one or more resin with immobilized ascorbic acid, or a mixture of two or more of these reducing agents.

7. The process according to any one of the preceding claims, wherein the metal is selected from the group consisting of silver, gold, copper, platinum, palladium, nickel, indium, tin, iron, cobalt and combinations of two or more of these metals.

8. The process according to any one of the preceding claims, wherein the substrate is present and comprises elemental carbon and/or one or more metals other than the metal of claim 1.

9. The process according to any one of the preceding claims, wherein the process is carried out at a temperature in the range from 10°C to 80°C.

10. The process according to any one of the preceding claims, wherein the process further comprises:
(c) isolating the metal nanoparticles from the reaction mixture of step (b).

11. A composition comprising metal nanoparticles and/or metal-containing nanostructured composites suspended in a mixture of ethanol, water, dispersion stabilizer, and at least one ascorbic compound selected from the group consisting of ascorbic acid, diketone tautomer of ascorbic acid, and dehydroascorbic acid, esters thereof and salts thereof.

12. The composition according to claim 11, wherein the metal is silver.

13. The composition according to claim 11 or 12, wherein the stabilizer is at least one carboxylic acid and/or alkoxylated amine.

14. A kit for making metal nanoparticles or metal-containing nanostructured composite materials comprising:
(A) a composition comprising (1) a homogeneous single-phase liquid solution comprising water; at least one metal salt and/or metal salt complex dissolved in the solution to provide metal ions, or metal ion complex, in solution; at least one dispersion stabilizer for minimizing or preventing aggregation of the metal nanoparticles when the metal ions are reduced to the zero valent elemental state; and at least one polar liquid hydrocarbon compound other than the dispersion stabilizer which is miscible with water and the dispersion stabilizer and, optionally, (2) one or more solid substrates and
(B) a reducing agent composition comprising a reducing agent that is capable of reducing the metal ions of the metal salt and/or metal salt complex of composition (A) to a zero valence elemental state.

15. A method for making metal nanoparticles or composite materials comprising combining components (A) and (B) of the kit according to claim 14 to form a mixture while applying agitation to the mixture at a temperature below the boiling point of the solution of component (A) for a time period sufficient to form the metal nanoparticles or metal-containing nanostructured composite materials.
